# EUROPEAN PATENT SPECIFICATION

(11) **EP 1 589 053 B1**
(45) Date of publication and mention of the grant of the patent: **10.07.2013**
(21) Application number: 04705163.6
(22) Date of filing: 26.01.2004
(51) Int. Cl.: C08G 18/66, A63B 37/12

(54) **THERMOPLASTIC POLYURETHANE AND USE THEREOF**
THERMOPLASTISCHES POLYURETHAN UND VERWENDUNG DAVON
POLYURETHANE THERMOPLASTIQUE ET UTILISATIONS

(30) Priority: 27.01.2003 JP 2003017254; 27.01.2003 JP 2003017255
(43) Date of publication of application: 26.10.2005
(73) Proprietor: Dainichiseika Color & Chemicals Mfg. Co., Ltd., Chuo-ku Tokyo 103-8383 (JP); UKIMA COLOUR & CHEMICALS MFG. CO., LTD., Tokyo 103-8383 (JP)
(72) Inventor: KOSHIRO, Y., DAINICHISEIKA COLOR & CHEMICALS MFG. CO., LTD., Tokyo 103-8383 (JP); NAKAMURA, S., DAINICHISEIKA COLOR & CHEMICALS MFG. CO., LTD., Tokyo 103-8383 (JP); SATO, Y,, DAINICHISEIKA COLOR & CHEMICALS MFG. CO., LTD., Tokyo 103-8383 (JP); TAKAHASHI, S, DAINICHISEIKA COLOR & CHEMICALS MFG. CO., LTD., Tokyo 103-8383 (JP)
(74) Representative: Hartz, Nikolai
(86) International application number: PCT/JP2004/000654
(87) International publication number: WO 2004/067598

(56) References cited:
- JP-A- 2 013 462
- JP-A- 60 049 941
- JP-A- 61 051 020
- JP-A- 2002 173 379
- JP-A- 2003 165 822
- JP-A- 2003 225 328
- JP-B1- 35 010 345
- US-B1- 6 435 986

## Description

### Technical Field

This invention relates to thermoplastic polyurethanes (hereinafter simply called "polyurethanes"), which have high impact resilience, do not vary much in impact resilience depending on changes in temperature and are useful especially as cover materials for golf balls.

### Background Art

Polyurethanes have high strength and are excellent in properties such as abrasion resistance and flexing resistance, and have been used for many years in applications such as pressure hoses, packings, conveyor belts and soles. In the field of golf balls, on the other hand, polyurethanes have been finding utility as cover materials for multi-piece golf balls (may hereinafter be called simply "golf balls") in recent years for their spin characteristics, flight performance, hit feel (a feel upon hitting a golf ball), durability, mass productivity, and the like (see JP-A-6-182002, JP-A-9-271538, JP-A-11-178949 and JP-A-11-253580) . The polyurethanes used as cover materials in such conventional golf balls are, however, accompanied by drawbacks that their impact resilience is not very high and varies significantly with temperature and that their impact resilience drops considerably especially when the outdoor temperature is low. There is, accordingly, an outstanding desire for the solution of these problems. FR 1540799 discloses the synthesis of polyurethanes from high molecular weight hydrogel polyesters.

Therefore, an object of the present invention is to provide a polyurethane improved in the above-described drawbacks of the conventional polyurethanes, especially a polyurethane useful as a cover material for golf balls.

### Disclosure of the Invention

To achieve the above-described object, the present inventors have proceed with a variety of investigations. As a result, it has been found that a polyurethane making use of 1,4-bis(hydroxyethoxy)benzene (hereinafter called "BHEB") as a low molecular weight diol in combination with a high molecular weight diol upon production of the polyurethane is characterized in that it has high impact resilience and also in that its impact resilience does not drop much in a low temperature range, in other words, its impact resilience does not vary much depending on changes in outdoor temperature. Those findings have then led to the completion of the present invention.

The above-described obj ect can be achieved by the present invention as defined in claim 1. Specifically, the present invention provides a polyurethane comprising segments A formed of a high molecular weight diol, segments B formed of BHEB , and segments C formed of a polyisocyanate. The segments A, B and C are bonded together in a linear form by urethane bonds. The segments B account for 1 to 30 wt.% in the polyurethane.

In the above-described present invention, it is preferred that the polyurethane further comprises segments D formed of a low molecular weight diol other than BHEB ; the segments A each comprises a segment E formed of a polysiloxane diol or modified polysiloxane diol.

In the above-described present invention, the high molecular weight diol is at least one diol having a number average molecular weight of from 600 to 4,000 and comprises polysiloxane diols, the low molecular weight diol is BHEB, the polyisocyanate is 4,4'-diphenylmethane diisocyanate(hereinafter called"MDI"), and these high molecular weight diol, low molecular weight diol and polyisocyanate are used in proportions of 100 parts by weight, from 10 to 120 parts by weight and from 20 to 170 parts by weight, respectively.

The polyurethane according to the present invention is suited as a cover material for golf balls especially when its impact resilience at 23°C is from 50 to 90% and its impact resilience at 0°C is as much as at least 0. 6 times of its impact resilience at 23°C.

The above-described polyurethanes are useful especially as cover materials for gold balls.

### Best Modes for Carrying out the Invention

The present invention will next be described in further detail based on best modes for preferably carrying out the invention. While the polyurethane according to the present invention is useful for various applications, it is useful especially as a cover material for golf balls. Taking cover materials for golf balls as a representative example of its applications, the present invention will be described hereinafter.

The present invention relates to a polyurethane useful as a cover material to form a cover of a golf ball which is formed of a core and the cover, and the polyurethane is characterized in that it has been synthesized using BHEB as a low molecular weight diol, that is, a raw material for the synthesis of polyurethane.

Employed as golf balls include two-piece golf balls formed of a core and a single layer of a cover and having a structure that the core made of a crosslinked cis-1,4-polybutadiene or the like excellent in impact resilience is covered with the cover made of a cover material such as a polyurethane; and three-piece golf balls with an additional cover applied on the two-piece golf ball to have covers in two layers. The polyurethane according to the present invention is useful as a cover material for forming covers of such golf bolls.

A polyurethane is generally obtained by reacting a high molecular weight diol and a polyisocyanate with each other. However, the polyurethane according to the present invention is obtained by using BHEB and optionally, a further low molecular weight diol such as 1,4-butanediol in combination with a high molecular weight diol and then reacting them with a polyisocyanate.

The above-described polyurethane according to the present invention can be expressed as one having a repetition of bonding units as represented, for example, by the formula {-(A-C-B-C-B)-}, in which A represents a segment formed of a high molecular weight diol, B represents a segment formed of BHEB, and C represents a segment formed of a polyisocyanate. These individual segments are bonded together by urethane bonds. In the present invention, the segments B are contained in a proportion of from 1 to 30 wt.% in the polyurethane. It is to be noted that the above-described formula is illustrative and is changeable depending on the kinds and proportions of raw materials employed upon production of the polyurethane.

As the high molecular weight diol which makes up the segments A in the present invention, it is possible to use any one of known high molecular weight diols employed to date in the production of polyurethanes, although those having a number average molecular weight of from 1,000 to 10,000 (by the end-group analysis) are preferred. Examples of the high molecular weight diol include polyester diols, polyether diols, polycarbonate diols, polylactone diols, and polysiloxane diols.

Polyester diols are available from condensation polymerization, for example, between dibasic acids (succinic acid, glutaric acid, adipic acid, sebacic acid, fumaric acid, maleic acid, terephthalic acid, isophthalic acid, naphthalenedicarboxylic acid, tartaric acid, oxalic acid, malonic acid, pimelic acid, suberic acid, glutaconic acid, azelaic acid, 1,4-cyclohexanedicarboxylic acid, α-hydromuconic acid, β-hydromuconic acid, α-butyl-α-ethylglutaric acid, α,β-diethylsuccinic acid, and the like) or their anhydrides and glycols (for example, aliphatic glycols such as ethylene glycol, diethylene glycol, triethylene glycol, dipropylene glycol, tripropylene glycol, 1,2-propanediol, 1,3-propanediol, 1,2-butanediol, 1,3-butanediol, 1,4-butanediol, 1,5-pentanediol, 1,6-hexanediol, 3-methyl-1,5-pentanediol, 1,8-octanediol, 1,9-nonanediol and neopentyl glycol; alicyclic glycols such as bishydroxymethylcyclohexane and cyclohexane-1,4-diol; aromatic glycols such as xylylene glycol) or C₁-C₁₈ alkylenediethanolamines. Illustrative polyester diols include condensation polyester diols such as polyethylene adipate diol, polybutylene adipate diol, and polyhexamethylene adipate diol.

Illustrative polylactone diols include lactone polyester diols such as polylactone diol, polycaprolactone diol and polymethylvalerolactone diol, which can be obtained by subjecting lactone to ring-opening polymerization while using the above-described diols as initiators.

Illustrative polyether diols include homopolyether diols of alkylene oxides, such as PTMG, polyethylene ether glycol and polypropylene ether glycol; and copolyether diols of different alkylene oxides.

Illustrative polycarbonate diols include poly-1,6-hexanecarbonate diol and poly-1,4-butylenecarbonate diol.

Use of a polysiloxane diol as a part or the entire part of the high molecular weight diol is preferred in the present invention. Usable examples include polysiloxane diols represented by the following formula (I), (II) or (III) although known polysiloxane diols are usable. These polysiloxane diols can each form the segments E in the polyurethane according to the present invention. 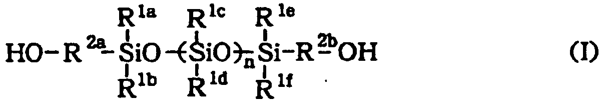 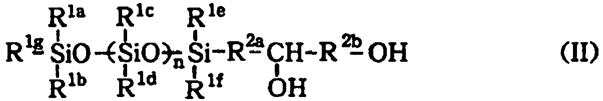 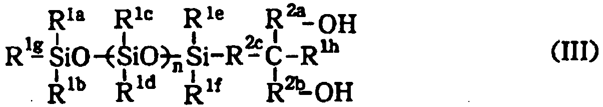 wherein R^{1a} to R^{1h} each independently represents an alkyl group having 1 to 8 carbon atoms or an aryl group, R^{2a} to R^{2c} each independently represents an alkylene group or a divalent substituent group containing an ester bond or ether bond, and n stands for an integer of from 1 to 300 or so.

Specific examples of such polysiloxane diols include the following polysiloxane diols:

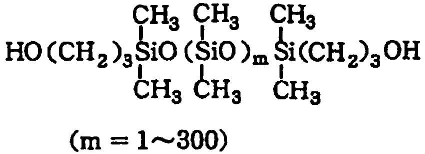

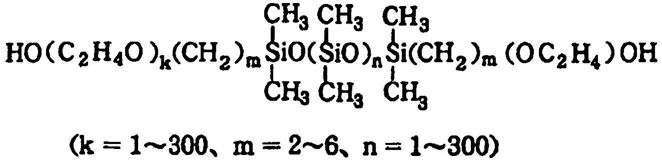

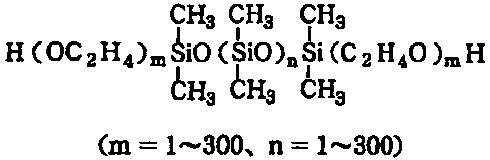

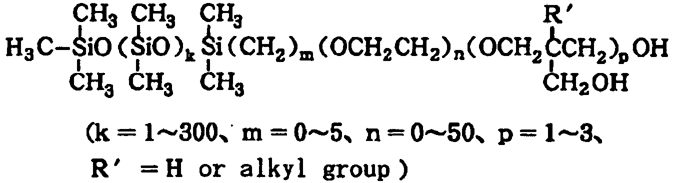

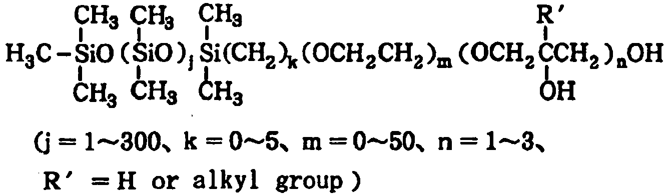

In the present invention, BHEB is used as a low molecular weight diol in combination with the above-described high molecular weight diol upon production of the polyurethane. In addition to the low molecular weight diol a further low molecular weight diol can also be used in combination as needed. The further low molecular weight diol forms the segments D in the polyurethane according to the present invention.

As the further low molecular weight diol, it is possible to use any one of known low molecular weight diols which have been used conventionally in the production of polyurethanes. However, preferred are those having number average molecular weights not greater than 250 as measured by the end-group analysis. Illustrative are aliphatic glycols such as ethylene glycol, diethylene glycol, triethylene glycol, dipropylene glycol, tripropylene glycol, 1,2-propanediol, 1,2-butanediol, 1,3-butanediol, 1,4-butanediol, 1,5-pentanediol, 1,6-hexanediol, 3-methyl-1, 5-pentanediol, 1,8-octanediol, 1,9-nonanediol and neopentyl glycol; alicyclic glycols such as bishydroxymethylcyclohexane and cyclohexane-1,4-diol; and aromatic glycols such as xylylene glycol.

BHEB is used in such a proportion that the segments B formed of the diol account for 1 to 30 wt.%, more preferably 5 to 25 wt.% in the resulting polyurethane. An excessively small proportion of these segments B will result in a polyurethane the hardness of which will be too low, while an unduly large proportion of them will lead to a polyurethane the impact resilience of which will be low. When BHEB is used in combination with a further low molecular weight diol, the proportion of BHEE may account for 30 wt.% or more but less than 100 wt.%, preferably 65 wt.% or more but less than 100 wt.%. A proportion of BHEB smaller than 30 wt. % or greater than 65 wt. % is not preferred, because a proportion of BHEB smaller than 30 wt.% will result in a polyurethane with low impact resilience while a proportion of BHEB greater than 65 wt. % will lead to a polyurethane with high impact resilience.

The polyisocyanate for use in the present invention

The polyurethane according to the present invention can be obtained by reacting the above-described components. As its production process, known polyurethane production processes can each be used. It is preferred to use the high molecular weight diol (s) and low molecular weight diol (s) and the polyisocyanate at such a ratio that the NCO/OH equivalent ratio falls within a range of from 0.95 to 1.10.

The polyurethane according to the present invention has, measured according to JIS K7311, an impact resilience at 23°C of from 50 to 90%. If the impact resilience at 23°C is lower than 50%, golf balls produced using such a polyurethane as a cover material are poor in travel performance. If the impact resilience at 23°C is higher than 90%, on the other hand, the synthesis of such a polyurethane itself is difficult. Further, the polyurethane according to the present invention has, measured according to JIS K7311, a ratio of its impact resilience (Rb) at 0°C to its impact resilience at 23°C (Rb(0°C)/Rb(23°C)) of 0.60 or greater. If this ratio is smaller than 0.60, balls produced using such a polyurethane as a cover material considerably vary in travel distance and hit feel depending on whether the outdoor temperature is high or low. In addition, the polyurethane according to the present invention may preferably have a hardness in a range of from JIS A60 to JIS D80 as measured in accordance with JIS K7311.

The polyurethane according to the present invention can be used especially as a cover material for multi-piece golf balls. It can also be used as an intermediate-layer-forming material for multi-piece golf balls which are each formed from a core, an intermediate layer and a cover. When the polyurethane according to the present invention is used as a cover material for golf balls, it can be used in the form of a molding composition which contains the polyurethane according to the present invention as a principal component and may also use other polymer(s) in combination as needed. Further, conventional additives such as colorants, antioxidants, ultraviolet light absorbers and parting agents can also be added to the composition.

Taking the cover material for golf balls as a representative example, the application of the polyurethane according to the present invention has been described above. However, the application of the polyurethane according to the present invention is not limited to a cover material for golf balls, and the polyurethane according to the present invention is also useful as materials, for example, for industrial parts or components such as gears, packings, rollers, casters, high-impact tubes, high impact hoses, wire coverings, high-impact belts and high-impact films and also for sports goods such as sports shoes and bowling pins.

### Examples

The present invention will hereinafter be described more specifically based on Examples and Comparative Examples, in which the designations "part" or "parts" and "%" are on a weight basis unless otherwise specifically indicated.

The strength properties and hardness of the polyurethane in each of the Examples and Comparative Examples were measured following JIS K7311, and its impact resilience was measured following JIS K7311, all on a Lupke testing equipment. Further, its flow properties were measured by a Koka flow tester equipped with a 1 mm (diameter) x 10 mm (length) nozzle under the conditions of 4.9 MPa (50kgf/cm²) load and 3°C/min heating rate. Examples 1 to 4 and 6 to 10 are reference examples.

### Example 1

In polybutylene adipate diol having a number average molecular weight of 2, 000 (1,000 parts), BHEB (196 parts) and MDI (387 parts) were evenly mixed with stirring, and the resulting mixture was poured into a tray, followed by a reaction at 110°C . After the thus-obtained reaction product was crushed, it was pelletized at 200 to 230°C through an extruder into pellets of a polyurethane (U1). Those pellets were formed into specimens by injection molding (in the subsequent Examples and Comparative Examples, specimens were formed likewise), and they were measured for hardness, strength properties (23°C), flow properties and impact resilience (0°C, 23°C). The measurement results are presented in Table 1.

### Example 2

In PTMG having a number average molecular weight of 1, 700 (1,000 parts), BHEB (178 parts) and MDI (401 parts) were evenly mixed with stirring, and the resulting mixture was poured into a tray, followed by a reaction at 110°C. Subsequently, a pelletized polyurethane (U2) was obtained in a similar manner as in Example 1. The results of measurements of various properties of that polyurethane are presented in Table 1.

### Example 3

In poly-ε-caprolactone diol having a number average molecular weight of 2, 000 (1,000 parts), BHEB (200 parts) and MDI (393 parts) were evenly mixed with stirring, and the resulting mixture was poured into a tray, followed by a reaction at 110°C. Subsequently, a pelletized polyurethane (U3) was obtained in a similar manner as in Example 1. The results of measurements of various properties of that polyurethane are presented in Table 1.

### Example 4

In hexamethylene carbonate diol having a number average molecular weight of 2,000 (1, 000 parts), BHEB (189 parts) and MDI (378 parts) were evenly mixed with stirring, and the resulting mixture was poured into a tray, followedby a reaction at 110°C. Subsequently, a pelletized polyurethane (U4) was obtained in a similar manner as in Example 1. The results of measurements of various properties of that polyurethane are presented in Table 1.

### Example 5

In an ester-modified polysiloxane diol having a number average molecular weight of 5,200 and a siloxane content of 60% (1,000 parts) and PTMG having a number average molecular weight of 1,700 (450 parts), BHEB (258 parts) and MDI (514 parts) were evenly mixed with stirring, and the resulting mixture was poured into a tray, followed by a reaction at 110°C. Subsequently, a pelletized polyurethane (U4) was obtained in a similar manner as in Example 1. The results of measurements of various properties of that polyurethane are presented in Table 1. The ester-modified polysiloxane diol had been obtained beforehand by copolymerizing an alcohol-modified siloxane oil ("KF-6002", product of Shin-Etsu Chemical Co., Ltd.), which had a number average molecular weight of 3,200 and the below-described structure, with ε-caprolactone.

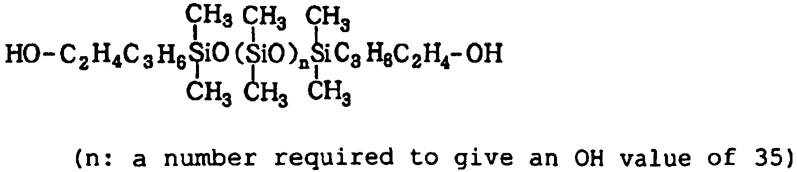

### Comparative Example 1

In PTMG having a number average molecular weight of 1, 700 (1, 000 parts), 1,4-butanediol (111 parts) and MDI (474 parts) were evenly mixed with stirring, and the resulting mixture was poured into a tray, followed by a reaction at 100°C. Subsequently, a pelletized polyurethane (U6) was obtained in a similar manner as in Example 1. The results of measurements of various properties of that polyurethane are presented in Table 1.

### Comparative Example 2

In polybutylene adipate diol having a number average molecular weight of 2, 000 (1,000 parts), 1,4-butanediol (153 parts) and MDI (573 parts) were evenly mixed with stirring, and the resulting mixture was poured into a tray, followed by a reaction at 100°C. Subsequently, a pelletized polyurethane (U7) was obtained in a similar manner as in Example 1. The results of measurements of various properties of that polyurethane are presented in Table 1.

**Table 1**

| | PU | Hardness (JIS A) | M100 (MPa) | TB (MPa) | EB (%) | Flow beginning temp. (°C) | Melt viscosity (dPa·s:210°C) | Impact resilience (%) | | Impact resilience ratio ((1)/(2)) |
|---|---|---|---|---|---|---|---|---|---|---|
| | | | | | | | | (1) 0°C | (2) 23°C | |
| Ex. 1 | U1 | 88 | 7.6 | 37.3 | 385 | 188 | 1.7×10⁴ | 44.1 | 61.1 | 0.72 |
| Ex. 2 | U2 | 85 | 7.2 | 36.7 | 410 | 179 | 1.6×10⁴ | 55.2 | 74.6 | 0.74 |
| Ex. 3 | U3 | 92 | 8.1 | 40.2 | 374 | 212 | 2.3×10⁴ | 46.8 | 62.5 | 0.75 |
| Ex. 4 | U4 | 91 | 8.2 | 36.7 | 388 | 204 | 2.1×10⁴ | 43.3 | 60.9 | 0.71 |
| Ex. 5 | U5 | 85 | 7.1 | 18.7 | 352 | 181 | 4.8×10⁴ | 63.1 | 78.9 | 0.80 |
| Comp. Ex. 1 | U6 | 88 | 7.6 | 38.4 | 506 | 182 | 1.8×10⁴ | 18.3 | 41.5 | 0.44 |
| Comp. Ex. 2 | U7 | 92 | 7.8 | 45.5 | 452 | 198 | 4.1X10⁴ | 14.5 | 36.5 | 0.40 |

| | | | | | | | | | | |
|---|---|---|---|---|---|---|---|---|---|---|
| (Note) PU: polyurethane M100: 100% modulus TB: Tensile strength at break EB: Elongation at break | | | | | | | | | | |

From the results of Table 1, the polyurethanes (U1 to U5) of Examples 1 to 5, which contained BHEB within the range of from 1 to 30%, had impact resiliences at 23°C of from 50 to 90%, and moreover, their impact resiliences at 0°C were as high as 0.60 times or more of their impact resiliences at 23°C. It is, therefore, understood that they had high impact resiliences not affected by changes in outdoor temperature and are suited as cover materials for golf balls. In the BHEB-free polyurethanes (U6, U7) of Comparative Examples 1 and 2, on the other hand, their impact resiliences at 23°C were not greater than 50%, and their impact resiliences at 0°C were not greater than 0.60 times of their impact resiliences at 23°C. It is, therefore, understood that their impact resiliences are affected considerably by changes in outdoor temperature and they are not suited as cover materials for golf balls.

### Example 6

In polybutylene adipate diol having a number average molecular weight of 2, 000 (1,000 parts), 1,3-propanediol (124 parts) and MDI (554 parts) were evenly mixed with stirring, and the resulting mixture was poured into a tray, followed by a reaction at 100°C. Subsequently, a pelletized polyurethane (U8) was obtained in a similar manner as in Example 1. The results of measurements of various properties of that polyurethane are presented in Table 2.

### Example 7

In PTMG having a number average molecular weight of 1, 700 (1,000 parts), 1, 3-propanediol (98 parts) and MDI (487 parts) were evenly mixed with stirring, and the resulting mixture was poured into a tray, followed by a reaction at 100°C. Subsequently, a pelletized polyurethane (U9) was obtained in a similar manner as in Example 1. The results of measurements of various properties of that polyurethane are presented in Table 2.

### Example 8

In poly-ε-caprolactone diol having a number average molecular weight of 2, 000 (1,000 parts), 1, 3-propanediol (105 parts) and MDI (490 parts) were evenly mixed with stirring, and the resulting mixture was poured into a tray, followed by a reaction at 100°C. Subsequently, a pelletized polyurethane (U10) was obtained in a similar manner as in Example 1. The results of measurements of various properties of that polyurethane are presented in Table 2.

### Example 9

In hexamethylene carbonate diol having a number average molecular weight of 2, 000 (1,000 parts), 1, 3-propanediol (113 parts) and MDI (515 parts) were evenly mixed with stirring, and the resulting mixture was poured into a tray, followed by a reaction at 100°C. Subsequently, a pelletized polyurethane (U11) was obtained in a similar manner as in Example 1. The results of measurements of various properties of that polyurethane are presented in Table 2.

### Example 10

In an ester-modified polysiloxane diol having a number average molecular weight of 5,200 and a siloxane content of 60% (1,000 parts) and PTMG having a number average molecular weight of 1, 700 (450 parts), 1,3-propanediol (190 parts) and MDI (827 parts) were evenly mixed with stirring, and the resulting mixture was poured into a tray, followed by a reaction at 100°C. Subsequently, a pelletized polyurethane (U12) was obtained in a similar manner as in Example 1. The results of measurements of various properties of that polyurethane are presented in Table 2. The ester-modified polysiloxane diol had been obtained beforehand by copolymerizing an alcohol-modified siloxane oil ("KF-6002", product of Shin-Etsu Chemical Co., Ltd.), which had a number average molecular weight of 3,200 and the below-described structure, with ε-caprolactone.

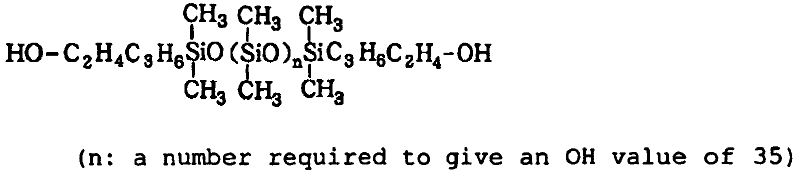

**Table 2**

| | PU | Hardness (JIS A) | M100 (MPa) | TB (MPa) | EB (%) | Flow beginning temp. (°C) | Melt viscosity (dPa·s:210°C) | Impact resilience (%) | | Impact resilience ratio ((1)/(2)) |
|---|---|---|---|---|---|---|---|---|---|---|
| | | | | | | | | (1) 0°C | (2) 23°C | |
| Ex. 6 | U8 | 90 | 7.9 | 40.2 | 407 | 191 | 1.9×10⁴ | 42.4 | 60.2 | 0.70 |
| Ex. 7 | U9 | 89 | 7.8 | 38.8 | 375 | 183 | 2.2×10⁴ | 52.7 | 72.8 | 0.72 |
| Ex. 8 | U10 | 88 | 7.2 | 41.0 | 402 | 186 | 1.7×10⁴ | 44.3 | 62.5 | 0.71 |
| Ex. 9 | U11 | 92 | 8.2 | 39.1 | 386 | 194 | 2.9×10⁴ | 41.0 | 59.4 | 0.69 |
| Ex. 10 | U12 | 86 | 7.1 | 18.7 | 352 | 203 | 6.1×10⁴ | 62.7 | 76.6 | 0.82 |

| | | | | | | | | | | |
|---|---|---|---|---|---|---|---|---|---|---|
| (Note) PU, M100, TB and EB have the same meanings as indicated in Table 1 | | | | | | | | | | |

From the results of Table 2, the polyurethanes (U8 to U12) of Examples 6 to 10, which contained segments B of 1, 3-propanediol within the range of from 1 to 30%, had impact resiliences at 23°C of from 50 to 90%, and moreover, their impact resiliences at 0°C were as high as 0.60 times or more of their impact resiliences at 23°C. It is, therefore, understood that they had high impact resiliences not affected by changes in outdoor temperature and are suited as cover materials for golf balls.

### Industrial Applicability

According to the above-described present invention, a polyurethane having high impact resilience can be provided. Its impact resilience is not affected by outdoor temperature, in other words, its impact resilience does not vary much depending on changes in outdoor temperature. The polyurethane can be used for various applications, and is useful especially as a cover material for golf balls.

## Claims

1. A thermoplastic polyurethane useful as a cover material for golf balls, **characterized in that** said thermoplastic polyurethane comprises
(a) segments A formed of a high molecular weight diol,
(b) segments B formed of 1,4-bis(hydroxyethoxy)benzene, and
(c) segments C formed of a polyisocyanate,
- said segments A, B and C are bonded together in a linear form by urethane bonds,
- wherein said segments A each comprises a segment E formed of a polysiloxane diol or modified polysiloxane diol, and said high molecular weight diol is at least one diol having a number average molecular weight of from 600 to 4,000,
- said segments B accounting for 1 to 30 wt% in said thermoplastic polyurethane,
- said polyisocyanate is 4,4'-diphenylmethane diisocyanate,
- said high molecular weight diol, said low molecular weight diol and said polyisocyanate are used in proportions of 100 parts by weight, from 10 to 120 parts by weight and from 20 to 170 parts by weight, respectively, and
- said thermoplastic polyurethane has an impact resilience measured according to JIS K7311 at 23°C of from 50 to 90% and has an impact resilience at 0°C as much as at least 0.6 times of its impact resilience at 23°C.

## Patentansprüche

1. Thermoplastisches Polyurethan, das als Ummantelungsmaterial für Golfbälle brauchbar ist, **gekennzeichnet dadurch, dass** das thermoplastische Polyurethan umfasst
(a) Segmente A, die aus einem hochmolekularen Diol gebildet werden,
(b) Segmente B, die aus 1,4-Bis(hydroxyethoxy)benzol gebildet werden, und
(c) Segmente C, die aus einem Polyisocyanat gebildet sind,
- wobei die Segmente A, B und C in einer linearen Weise über Urethanbindungen verbunden sind,
- wobei die Segmente A jeweils ein Segment E umfassen, das aus einem Polysiloxandiol oder einem modifiziertem Polysiloxandiol gebildet wird und das hochmolekulare Diol mindestens ein Diol mit einem Molekulargewichtszahlenmittel von 600 bis 4000 ist,
- wobei die Segmente B 1 bis 30 Gewichts-% des thermoplastischen Polyurethan ausmachen,
- wobei das Polyisocyanat 4,4'-Diphenylmethandüsocyanat ist,
- wobei das hochmolekulare Diol, das niedermolekulare Diol und das Polyisocyanat jeweils in einem Verhältnis von 100 Gewichtsteilen, von 10 bis 120 Gewichtsteilen und 20 bis 170 Gewichtsteilen eingesetzt werden, und
- wobei das thermoplastische Urethan eine Stoßelastizität, gemessen nach JIS K7311 bei 23°C, von 50 bis 90% und eine Stoßelastizität bei 0°C des mindestens 0,6-fachen d
er Stoßelastizität bei 23°C aufweist.

## Revendications

1. Polyuréthane thermoplastique utile en tant que matériau de revêtement pour balles de golf, **caractérisé en ce que** ledit polyuréthane thermoplastique comprend
(a) des segments A formés d'un diol de masse moléculaire élevée,
(b) des segments B formés de 1,4-bis(hydroxyéthoxy)-benzène, et
(c) des segments C formés d'un polyisocyanate,
- lesdits segments A, B et C étant liés ensemble sous une forme linéaire par des liaisons uréthane,
- dans lequel chacun desdits segments A comprend un segment E formé d'un polysiloxane-diol ou d'un polysiloxane-diol modifié, et ledit diol de masse moléculaire élevée est au moins un diol présentant une masse moléculaire moyenne en nombre de 600 à 4000,
- lesdits segments B représentant 1 à 30 % en poids dudit polyuréthane thermoplastique,
- ledit polyisocyanate est le 4,4'-diphénylméthane diioscyanate,
- ledit diol de masse moléculaire élevée, ledit diol de faible masse moléculaire et ledit polyisocyanate sont utilisés en des proportions respectives de 100 parties en poids, de 10 à 120 parties en poids, et de 20 à 170 parties en poids, et
- ledit polyuréthane thermoplastique présente une résilience au choc, mesurée conformément à la norme JIS K7311 à 23°C, de 50 à 90 %, et une résilience au choc à 0°C aussi élevée qu'au moins 0,6 fois sa résilience au choc à 23°C.
